# EUROPÄISCHE PATENTSCHRIFT

(11) **EP 3 591 183 B1**
(45) Veröffentlichungstag und Bekanntmachung des Hinweises auf die Patenterteilung: **30.06.2021**
(21) Anmeldenummer: 19174916.7
(22) Anmeldetag: 16.05.2019
(51) Int. Cl.: F01N 13/18, F16L 27/10, F16L 27/111, F16L 51/02, F16L 51/03, F16L 55/04

(54) **FLEXIBLES LEITUNGSELEMENT FÜR DIE ABGASANLAGE EINES VERBRENNUNGSMOTORS**
FLEXIBLE PIPE ELEMENT FOR THE EXHAUST SYSTEM OF A COMBUSTION ENGINE
ÉLÉMENT DE CONDUITE FLEXIBLE POUR L'INSTALLATION DE GAZ D'ÉCHAPPEMENT D'UN MOTEUR À COMBUSTION INTERNE

(30) Priorität: 06.07.2018 DE 102018116441
(43) Veröffentlichungstag der Anmeldung: 08.01.2020
(73) Patentinhaber: Witzenmann GmbH, 75175 Pforzheim (DE)
(72) Erfinder: Balmer, Dr. Bert, 75180 Pforzheim (DE); Diener, Alexej, 75328 Schömberg (DE); Hornung, Jörg, 75248 Ölbronn-Dürrn (DE); Pluschke, Michael, 75305 Neuenbürg (DE); Reinbach, Florian, 76131 Karlsruhe (DE); Retz, Marius, 71665 Vaihingen/Enz (DE)
(74) Vertreter: Lemcke, Brommer & Partner Patentanwälte Partnerschaft mbB

(56) Entgegenhaltungen:
- EP-A1- 2 042 702
- EP-A1- 3 167 173
- EP-A2- 0 957 244
- DE-A1- 10 248 585
- DE-A1-102008 028 767
- DE-A1-102010 037 162
- DE-U1-202007 011 168
- US-A1- 2016 201 832

## Beschreibung

Die Erfindung betrifft ein flexibles Leitungselement für die Abgasanlage eines Verbrennungsmotors nach dem Oberbegriff des Patentanspruchs 1. Ein solches flexibles Leitungselement umfasst ein gasdichtes metallisches Hüllrohr sowie einen im Inneren des Hüllrohrs verlaufenden Metallschlauch. Das Hüllrohr weist mindestens zwei ringgewellte oder helixförmig gewellte Balgabschnitte auf, die jeweils, gemeinsam mit dem flexiblen Metallschlauch, flexible Leitungsabschnitte bilden. Die flexiblen Leitungsabschnitte sind jeweils durch einen nicht gewellten, im Wesentlichen unflexiblen Rohrabschnitt des Hüllrohrs voneinander getrennt, wobei die unflexible Eigenschaft des Rohrabschnitts in Relation zur Beweglichkeit der flexiblen Leitungsabschnitte zu verstehen ist. Der Metallschlauch ist zumindest punktuell am Rohrabschnitt zwischen den flexiblen Leitungsabschnitten befestigt.

Flexible Leitungselemente der vorliegenden Art werden in die Rohrleitungen von Abgasanlagen von Verbrennungsmotoren eingesetzt, die insbesondere in Kraftfahrzeugen eingebaut sind; jedoch ist der Einsatz auch bei sonstigen Verbrennungsmotoren, insbesondere stationären Verbrennungsmotoren üblich. Sie verbinden in der Regel die am Verbrennungsmotor befestigten, starren Abgasleitungen mit weiteren Teilen der Abgasanlage, die ihrerseits fest mit dem Fahrzeug oder dem Aufstellungsort des stationären Verbrennungsmotors verbunden sind. Die mit dem Verbrennungsmotor fest verbundenen Abgasleitungen bewegen sich zusammen mit dem Verbrennungsmotor, so dass diese Bewegungen durch flexible Leitungselemente der vorliegenden Art von den weiterführenden Teilen der Abgasanlage abgekoppelt werden müssen.

Ein flexibles Leitungselement der vorliegenden Art ist in der Lage, axiale, laterale und angulare Bewegungen aufzunehmen. Solche Bewegungen werden durch Lastwechselbewegungen des Verbrennungsmotors, durch temperaturbedingte Längenänderungen, und bei Fahrzeugen auch durch Erschütterungen im Fahrbetrieb erzeugt.

Vor allem aber erzeugt ein Verbrennungsmotor Schwingungen unterschiedlichster Frequenzen durch seine sich im Betrieb bewegenden Teile sowie durch die pulsierenden Gasströme. Diese Schwingungen werden ebenfalls von flexiblen Leitungselementen der vorliegenden Art von den weiterführenden Teilen der Abgasanlage abgekoppelt. Dies verhindert, dass die Schwingungen des Verbrennungsmotors langfristige Schäden in den weiterführenden Teilen der Abgasanlage verursachen und verhindert außerdem, dass die Schwingungen von der Abgasanlage als Körperschall abgestrahlt oder an eine Fahrzeugkarosserie weitergeleitet werden, was unerwünschte Brummgeräusche im Inneren des Fahrzeugs verursacht.

Das Hüllrohr eines flexiblen Leitungselements der vorliegenden Art sorgt für die gasdichte Verbindung zwischen der mit dem Verbrennungsmotor fest verbundenen Abgasleitung und den weiterführenden Teilen der Abgasanlage. Die mindestens zwei ringgewellten oder helixförmig gewellten Balgabschnitte verleihen dem Hüllrohr die notwendige Flexibilität, indem sie axiale, laterale und angulare Bewegungen ermöglichen.

Der im Inneren des Hüllrohrs verlaufende Metallschlauch dient der Strömungsführung des Abgasstroms. Er sorgt dafür, dass die thermische Belastung des Hüllrohrs und insbesondere der Balgabschnitte durch den Abgasstrom nicht all zu hoch wird, und er verhindert Verwirbelungen des Abgasstroms in den Wellungen der Balgabschnitte. Solche Verwirbelungen sind nachteilig, da sie zum einen den Strömungswiderstand erhöhen und zum anderen erhebliche Geräusche verursachen können.

Der Metallschlauch eines flexiblen Leitungselements der vorliegenden Art ist üblicherweise ein Wickelschlauch, der aus Hakenprofilen oder aus zu Agraffen gefalzten Metallprofilen hergestellt ist. Dies gewährleistet die erforderliche Beweglichkeit des Wickelschlauchs und wirkt darüber hinaus aufgrund der inneren Reibung der Profile gegeneinander schwingungsdämpfend.

Flexible Leitungselemente der vorliegenden Art werden insbesondere in Kraftfahrzeugen seit Jahren erfolgreich eingesetzt, wobei sie oft motornah, zwischen Abgaskrümmer und Katalysator eingebaut werden. Je nach den örtlichen Gegebenheiten des Einbauorts ist ihr Querschnitt entweder im Wesentlichen zylindrisch, oder aber abgeflacht, mit zum Beispiel ovalem oder stadionförmigem Querschnitt, ausgebildet.

Die schwingungsentkoppelnde Eigenschaft ergibt sich im Wesentlichen durch die Balgabschnitte des Hüllrohrs. Diese sind in der Lage, Schwingungsbewegungen aufzunehmen und nicht an die weiterführende Abgasanlage weiterzugeben. Allerdings ist dies nur so lange der Fall, wie die Schwingungsfrequenzen nicht im Bereich einer Eigenfrequenz des Hüllrohrs liegen. Denn im Bereich der Eigenfrequenzen wird das Hüllrohr zu Resonanzschwingungen angeregt, wodurch im Hüllrohr große Schwingungsamplituden auftreten können. Damit besteht die Gefahr von resonanzbedingten Ermüdungsbrüchen des Hüllrohrs, wenn es mit Schwingungen im Bereich seiner Eigenfrequenzen beaufschlagt wird.

Motorschwingungen von Verbrennungsmotoren sind in der Zündfrequenz besonders stark. Diese liegt abhängig von der Zylinderzahl und der maximalen Motordrehzahl typisch im Bereich zwischen 20 Hz und 300 Hz. Da die Hüllrohre von flexiblen Leitungselementen der vorliegenden Art in diesem Frequenzbereich üblicherweise Eigenfrequenzen aufweisen und somit anfällig für Resonanzschwingungen sind, sind sie oft mit zusätzlichen dämpfenden Elementen zur Bedämpfung der Resonanzen in diesem Frequenzbereich versehen, wie Gestrickeschläuchen aus Metalldraht, die über die Balgabschnitte gezogen oder auf diese aufgestrickt werden, oder auch Drahtpressringe, Geflechtsschläuche aus Metalldrähten und dergleichen, die außen auf die Balgabschnitte aufgesetzt werden und diese nicht notwendigerweise vollständig umhüllen.

Eine schwingungsdämpfende Wirkung zur Bedämpfung der Resonanzen des Hüllrohrs geht auch vom Metallschlauch aus, wenn dieser entsprechend ausgebildet, insbesondere aus miteinander verfalzten Agraffprofilen gewickelt ist, und solcherart mit dem Hüllrohr verbunden ist, dass er die Eigenfrequenzen des Hüllrohrs wirksam bedämpfen kann.

Ein flexibles Leitungselement der vorliegenden Art hat jedoch, wie eingangs erwähnt, außerdem die Aufgabe, Relativbewegungen zwischen dem Verbrennungsmotor und den weiterführenden Teilen der Abgasanlage aufzunehmen, die durch Lastwechselbewegungen und, im Fahrzeug, Schlechtweganregungen entstehen, und die deutlich größere Amplituden aufweisen, als die Motorschwingungen durch sich bewegende Motorteile und pulsierende Gasströme. Die Bauweise eines flexiblen Leitungselements der vorliegenden Art, bei der zwischen mindestens zwei durch Balgabschnitte definierten, flexiblen Leitungsabschnitten ein unflexibler Rohrabschnitt angeordnet ist, können solche Relativbewegungen mit besonderes großen Amplituden bzw. Auslenkungen aufnehmen. Beispiele solcher flexiblen Leitungselemente aus dem Stand der Technik sind beispielsweise in der US 2016/201832 A1, in der DE 20 2007 011168 U1, in der EP 2 203 632 B1, in der US 3,773,087, in der DE 197 22 603 C1 und in der EP 0 441 625 A1 beschrieben.

Es hat sich allerdings gezeigt, dass bei dieser Bauweise eines flexiblen Leitungselements die axialen Eigenfrequenzen des Hüllrohrs durch den im Inneren des Hüllrohrs verlaufenden Metallschlauch, selbst wenn dieser am unflexiblen Rohrabschnitt festgelegt ist, oft nicht in ausreichendem Maße bedämpft werden können. Bei herkömmlichen, mit zwei Balgabschnitten symmetrisch ausgebildeten flexiblen Leitungselementen betrifft dies in der Regel die geraden (d.h. die 2., 4., 6...) axialen Eigenfrequenzen.

Daher müssen die Balgabschnitte entweder zusätzlich bedämpft werden, was die Kosten des Leitungselements erhöht, oder die Balgabschnitte müssen einerseits so steif ausgebildet werden, dass insbesondere die zweite axiale Eigenfrequenz des Hüllrohrs oberhalb der nennenswerten Anregungsfrequenzen des Verbrennungsmotors liegt, und andererseits ausreichend weich ausgebildet werden, um die großen Verformungen aufgrund von Lastwechsel- und Schlechtweganregungen ohne ermüdungsbedingte Schäden zu überstehen.

Diese Anforderungen an die Balgabschnitte, einerseits steif und andererseits weich sein zu müssen, bilden einen klassischen Zielkonflikt, der bislang oft nicht befriedigend gelöst werden kann.

Ausgehend von diesem Stand der Technik liegt der vorliegenden Erfindung die Aufgabe zugrunde, ein flexibles Leitungselement der eingangs genannten Art solcherart weiterzubilden, dass axiale Eigenfrequenzen des Hüllrohrs besser durch den im Inneren des Hüllrohrs verlaufenden Metallschlauch bedämpft werden können, sodass sich die Gefahr von Resonanzschwingungen des flexiblen Leitungselements zumindest vermindert.

Gelöst ist diese Aufgabe durch ein flexibles Leitungselement mit den Merkmalen des Patentanspruchs 1. Bevorzugte Ausgestaltungen und Weiterbildungen des erfindungsgemäßen flexiblen Leitungselements sind in den Patentansprüchen 2 bis 10 niedergelegt.

Ein erfindungsgemäßes flexibles Leitungselement für die Abgasanlage eines Verbrennungsmotors, das, wie eingangs beschrieben, ein gasdichtes metallisches Hüllrohr und einen im Inneren des Hüllrohrs verlaufenden Metallschlauch umfasst, wobei das Hüllrohr mindestens zwei ringgewellte oder helixförmig gewellte Balgabschnitte aufweist, um (zusammen mit dem Metallschlauch) jeweils flexible Leitungsabschnitte zu bilden, die durch jeweils einen nicht gewellten, im Wesentlichen unflexiblen Rohrabschnitt des Hüllrohrs getrennt sind, wird also solcherart modifiziert, dass der Metallschlauch zwar, wie aus dem Stand der Technik an sich bekannt, am unflexiblen Rohrabschnitt befestigt ist, um aufgrund seiner inneren Reibung Resonanzen des Hüllrohrs bedämpfen zu können, diese Befestigung jedoch an einem Ort bzw. in mindestens einem Bereich des Rohrabschnitts erfolgt, in dem sich kein Schwingungsknoten ausbildet, wenn das Hüllrohr eine axiale Resonanzschwingung in einer seiner niedrigen axialen Eigenfrequenzen ausführt, und zwar insbesondere der ersten bis fünften, bevorzugt der ersten bis dritten Eigenfrequenzen. Dies wird erfindungsgemäß dadurch erreicht, dass die beiden Leitungsabschnitte des flexiblen Leitungselements solcherart ausgestaltet sind, dass mindestens die Schwingungsformen der niedrigen axialen Eigenfrequenzen des Hüllrohrs, insbesondere der ersten bis fünften, bevorzugt der ersten bis dritten Eigenfrequenzen, keinen Schwingungsknoten im Bereich der Befestigung des Metallschlauchs am Rohrabschnitt ausbilden.

Die im Stand der Technik bekannten flexiblen Leitungselemente mit mehreren, normalerweise zwei gewellten Balgabschnitten und zwischenliegendem Rohrabschnitt sind grundsätzlich symmetrisch aufgebaut, wobei der im Inneren des Hüllrohrs verlaufende Metallschlauch in der Regel am unflexiblen Rohrabschnitt befestigt ist.

Erfindungsgemäß ist erkannt worden, dass bei einer solchen, im Stand der Technik üblichen symmetrischen Ausgestaltung eines flexiblen Leitungselements mit mehreren, in der Regel zwei gewellten Balgabschnitten die geraden Eigenfrequenzen des Hüllrohrs praktisch nicht bedämpft werden, so dass zum einen Schwingungen im Bereich dieser Frequenzen nahezu ungehindert durch das flexible Leitungselement hindurch geleitet werden und zum anderen insbesondere die Gefahr von Ermüdungsbrüchen des Hüllrohrs besteht.

Es hat sich herausgestellt, dass die Befestigung des Metallschlauchs bei den symmetrisch aufgebauten flexiblen Leitungselementen nach dem Stand der Technik aufgrund des symmetrischen Aufbaus in etwa dort erfolgt, wo sich bei einer axialen Resonanzschwingung des Hüllrohrs in zumindest einer seiner geraden axialen Eigenfrequenzen ein Schwingungsknoten ausbildet. Dies hat zur Folge, dass der Metallschlauch für diese Schwingungsfrequenz keine dämpfende Wirkung auf das Hüllrohr ausüben kann, denn der Rohrabschnitt des Hüllrohrs führt im Schwingungsknoten keine axiale Bewegung mit der entsprechenden Resonanzfrequenz aus. Die axialen Eigenfrequenzen des Hüllrohrs, die bei einer Resonanzanregung zu Schwingungsknoten am Rohrabschnitt führen, also an derjenigen Stelle, an der der Metallschlauch am Rohrabschnitt befestigt ist, sind somit faktisch vom Metallschlauch entkoppelt und können von diesem daher nicht bedämpft werden.

Die erfindungsgemäße Maßnahme, die beiden Leitungsabschnitte solcherart auszugestalten, dass mindestens die Schwingungsformen der niedrigen axialen Eigenfrequenzen des Hüllrohrs keinen Schwingungsknoten im Bereich der Befestigung des Metallschlauchs, d.h. also im Bereich des Rohrabschnitts ausbilden, führt dazu, dass entsprechende axiale Eigenfrequenzen, die im Resonanzfall also gerade keinen Schwingungsknoten am Befestigungspunkt bzw. im Bereich der Befestigung des Metallschlauchs ausbilden, vom Metallschlauch wirkungsvoll bedämpft werden können.

Bevorzugt werden hierbei Schwingungsformen der ersten bis fünften, und besonders bevorzugt der ersten bis dritten axialen Eigenfrequenz ausgewählt.

Die erfindungsgemäße Ausgestaltung der Leitungsabschnitte des flexiblen Leitungselements kann dadurch erreicht werden, dass die beiden Balgabschnitte asymmetrisch ausgestaltet, d.h. insbesondere hinsichtlich ihrer Geometrie und/oder ihres Materials unterschiedlich ausgeführt und/oder mit zusätzlichen Verstimmungselementen versehen sind, so dass mindestens die Schwingungsformen der niedrigen axialen Eigenfrequenzen des Hüllrohrs, insbesondere der ersten bis fünften, bevorzugt der ersten bis dritten Eigenfrequenzen, keinen Schwingungsknoten im Bereich der Befestigung des Metallschlauchs am Rohrabschnitt aufweisen.

Vorzugsweise sind die beiden Leitungsabschnitte solcherart ausgestaltet, insbesondere die Balgabschnitte des Hüllrohrs hinsichtlich ihrer Geometrie und/oder ihres Materials solcherart unterschiedlich ausgeführt und/oder mit zusätzlichen Verstimmungselementen versehen, dass mindestens die Schwingungsformen der niedrigen axialen Eigenfrequenzen des Hüllrohrs im Frequenzbereich von 20 Hz bis 300 Hz keinen Schwingungsknoten im Bereich der Befestigung des Metallschlauchs am Rohrabschnitt aufweisen. Bevorzugt ist es hierbei, wenn nicht nur die Schwingungsknoten von mindestens einer der axialen Eigenfrequenzen in diesem Frequenzbereich betrachtet werden, sondern alle axialen Eigenfrequenzen im Frequenzbereich von 20 Hz bis 300 Hz und deren Schwingungsknoten im Resonanzfall berücksichtigt werden.

Der Zielkonflikt zwischen einerseits einer guten Schwingungsentkopplung und andererseits einer hohen Beweglichkeit hinsichtlich Auslenkungen und Lastwechselbewegungen und dergleichen kann durch die Erfindung daher signifikant entschärft werden, da nicht mehr so viel Wert auf die Schwingungsentkopplung gelegt werden muss und stattdessen das Leitungselement für Auslenkungsbewegungen optimiert werden kann, ohne dass dies zu Lasten der Schwingungsentkopplung geht. Die Balgabschnitte können also so weich ausgestaltet werden, dass deren Lebensdauer für große Verformungen im Betrieb des Verbrennungsmotors verlängert wird, ohne umgekehrt das Risiko eingehen zu müssen, dass die gewellten Balgabschnitte resonanzbedingt ausfallen.

Die hinsichtlich des Schwingungsverhaltens bewusst unsymmetrische Ausgestaltung des erfindungsgemäßen flexiblen Leitungselements ist auf vielen verschiedenen Wegen zu erreichen; so können zum einen die Balgabschnitte an sich mit unterschiedlichen Schwingungseigenschaften, insbesondere mit unterschiedlichen Eigenfrequenzen versehen werden. Dies kann durch die Verwendung von unterschiedlichen Materialien, durch unterschiedliche Wellenformen, durch unterschiedliche Längen der Balgabschnitte, durch eine unterschiedliche Anzahl von Wellen, durch unterschiedliche Wandstärken, oder auch durch unterschiedliche Beschichtungen, wie eine Warmisolations-Beschichtung und dergleichen erfolgen, sowie diese Auswirkungen auf die Eigenfrequenzen der jeweiligen Balgabschnitte haben. Ganz allgemein kann auch ein Balgabschnitt mit einem Verstimmungselement versehen werden, das die Eigenfrequenzen des betreffenden Balgabschnitts verändert, oder es werden unterschiedliche Verstimmungselemente bei den unterschiedlichen Balgabschnitten eingesetzt. Selbstverständlich ist auch eine Kombination von zwei oder mehreren dieser Maßnahmen zielführend.

Schließlich kann auch der Metallbalg ganz einfach außermittig am Rohrabschnitt befestigt sein, um die Befestigung aus dem Schwingungsknoten einer Resonanzschwingung des Hüllrohrs herauszunehmen, insbesondere wenn das Hüllrohr, wie im Stand der Technik üblich, symmetrisch ausgebildet ist.

Alle oben beschriebenen Maßnahmen sind bevorzugte Beispiele für eine erfindungsgemäße Asymmetrie der Schwingungseigenschaften des Hüllrohrs bezüglich der Anbindung bzw. Befestigung des Metallschlauchs am Hüllrohr. Durch eine solche Asymmetrie wird verhindert, dass die Anbindung des Metallschlauchs am Hüllrohr an einer Stelle lokalisiert ist, an der sich bei einer Resonanzschwingung des Hüllrohrs in einer seiner axialen Eigenfrequenzen ein Schwingungsknoten ausbildet.

Die gewollte Asymmetrie des erfindungsgemäßen flexiblen Leitungselements kann außerdem dadurch erzielt werden, dass mindestens zwei flexible Leitungsabschnitte bzw., wenn nur zwei flexible Leitungsabschnitte vorhanden sind, beide flexiblen Leitungsabschnitte solcherart verschieden ausgestaltet sind, dass sich die ersten axialen Eigenfrequenzen der beiden flexiblen Leitungsabschnitte um mindestens 20% unterscheiden. Wenn die unterschiedlichen Schwingungseigenschaften im Wesentlichen nur auf unterschiedlichen Schwingungseigenschaften der Balgabschnitte beruhen, ist es dementsprechend bevorzugt, wenn die ersten axialen Eigenfrequenzen der beiden Balgabschnitte sich um mindestens 20% unterscheiden. Dies kann beispielsweise dadurch erreicht werden, dass es bei gleicher Geometrie aller Wellen einen Unterschied von mindestens 20% in der Wellenanzahl der beiden Balgabschnitte gibt.

Drei Ausführungsbeispiele eines erfindungsgemäß ausgestalteten flexiblen Leitungselements werden im Folgenden anhand der beigefügten Zeichnungen näher beschrieben und erläutert. Es zeigen:
- Figur 1: eine teilgeschnittene Seitenansicht eines ersten Ausführungsbeispiels;
- Figur 1a: das Detail X aus Figur 1;
- Figur 1b: das Detail Y aus Figur 1;
- Figur 2: eine teilgeschnittene Seitenansicht eines zweiten Ausführungsbeispiels;
- Figur 2a: das Detail X aus Figur 2;
- Figur 2b: das Detail Y aus Figur 2;
- Figur 3: eine teilgeschnittene Seitenansicht eines dritten Ausführungsbeispiels;
- Figur 3a: das Detail X aus Figur 3;
- Figur 3b: das Detail Y aus Figur 3;
- Figur 3c: das Detail Z aus Figur 3;
- Figur 4: ein Diagramm zur Beanspruchung des Hüllrohrs bei axialer Anregung im Vergleich zwischen dem Stand der Technik und der vorliegenden Erfindung.

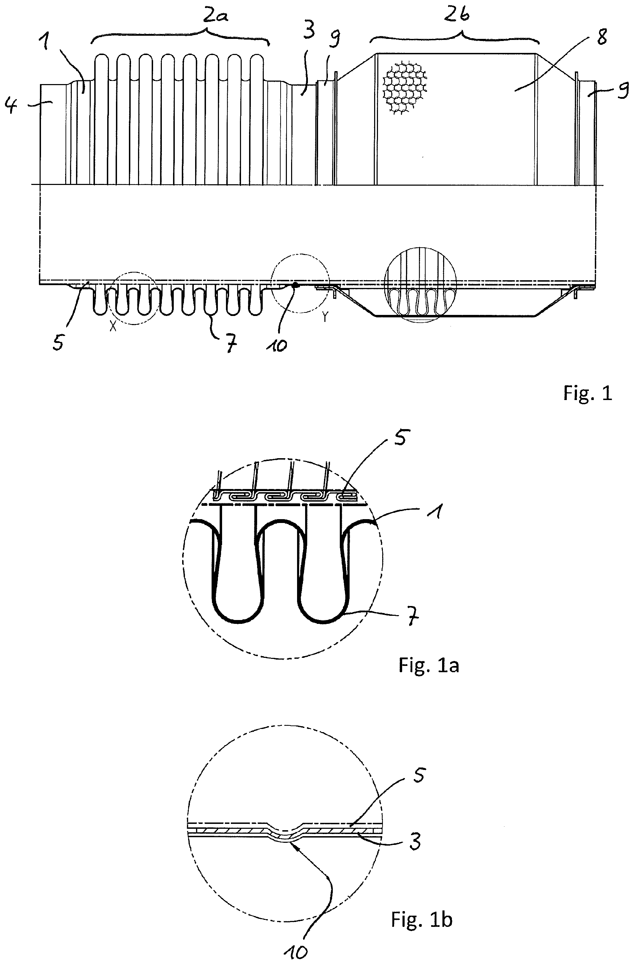

Die Figuren 1 bis 3 sind teilgeschnittene seitliche Ansichten von Ausführungsbeispielen für ein erfindungsgemäß ausgestaltetes flexibles Leitungselement. Es handelt sich jeweils um einen Doppelbalg mit einem Hüllrohr 1, das zwei ringförmig gewellte Balgabschnitte 2a, 2b mit einer Mehrzahl von Wellen 7 aufweist, um zwei flexible Leitungsabschnitte zu bilden. Diese beiden Balgabschnitte 2a, 2b schließen zwischen sich einen nicht gewellten, im Wesentlichen unflexiblen Rohrabschnitt 3 ein. An den beiden Enden des Leitungselements läuft das Hüllrohr 1 in jeweils einen Bord 4 aus.

Das Hüllrohr 1 besteht aus einem metallischen Werkstoff aus einer oder mehreren dünnen Lagen, und die Wellen 7 der ringgewellten Balgabschnitte 2a, 2b sind durch hydraulische Innendruck-Umformung hergestellt worden. Im Inneren des Hüllrohrs 1 verläuft ein Metallschlauch 5, der als herkömmlicher Wickelschlauch aus Agraff-Profilen ausgebildet ist und an den beiden Borden 4 sowie mittels einer Verpressung 10 am Rohrabschnitt 3 des Hüllrohrs 1 festgelegt ist.

Die Figuren 1a, 2a und 3a sind jeweils eine Vergrößerung des Details X aus den entsprechenden Figuren 1 bis 3. In diesen Detailvergrößerungen ist insbesondere verdeutlicht, dass der Metallschlauch 5 ein herkömmlicher Wickelschlauch aus Agraff-Profilen ist und eine entsprechend hohe innere Reibung aufweist.

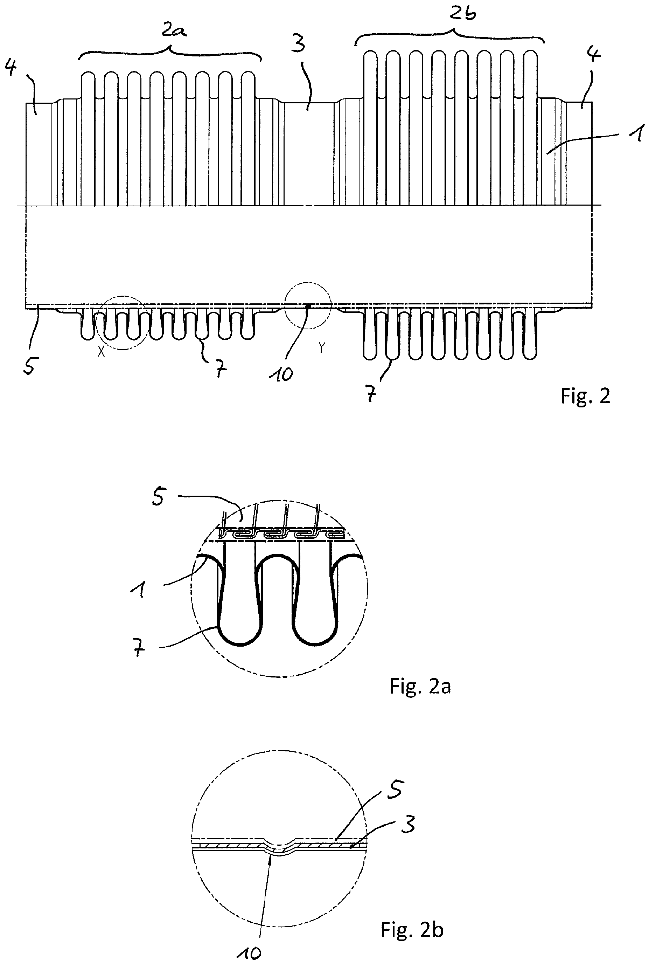

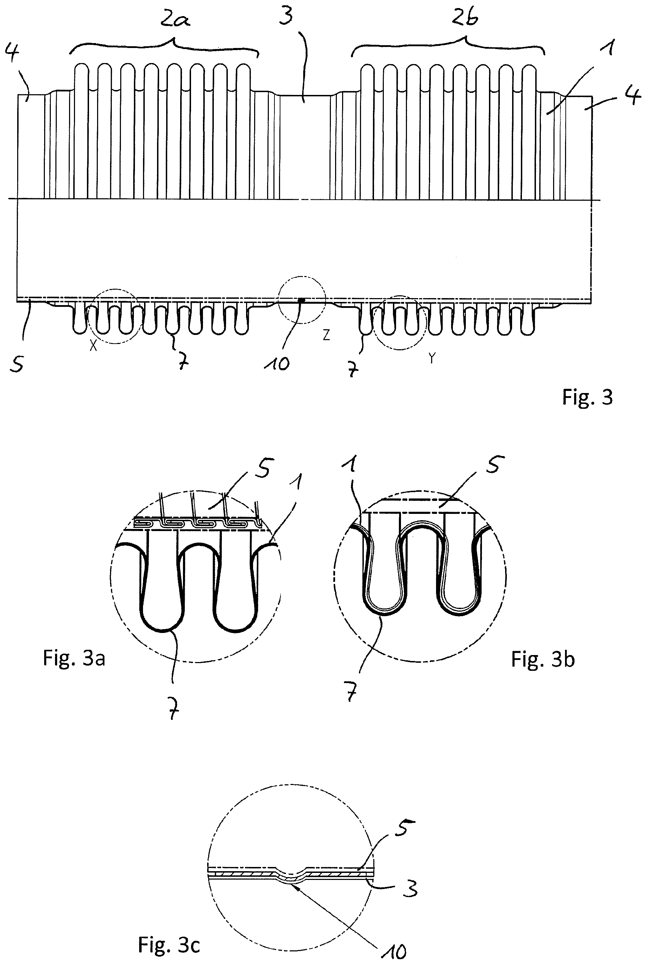

Die Figuren 1b, 2b und 3c sind Vergrößerungen der Details Y der Figuren 1 und 2 bzw. des Details Z in Figur 3. Hier wird jeweils verdeutlicht, dass der Metallschlauch 5 mittels einer Verpressung 10, die zu einer umlaufenden Sicke geführt hat, am unflexiblen Rohrabschnitt 3 des Hüllrohrs 1 festgelegt ist.

Die drei Ausführungsbeispiele, die in den Figuren 1 bis 3 dargestellt sind, unterscheiden sich durch die Art und Weise, wie die erfindungsgemäß verbesserten Schwingungseigenschaften des flexiblen Leitungselements erzeugt werden:

In Figur 1 sind das Hüllrohr 1 und die Balgabschnitte 2a, 2b, wie dies aus dem Stand der Technik bekannt ist, symmetrisch ausgebildet, und der unflexible Rohrabschnitt 3 bildet die Mitte des Leitungselements. Um die erfindungsgemäßen unterschiedlichen Schwingungseigenschaften der beiden flexiblen Leitungsabschnitte herzustellen, ist auf die Wellen 7 des Balgabschnittes 2b als Verstimmungselement 8 ein Gestrickeschlauch aufgezogen, der sich eng an die Außenkrempen der Wellen 7 anlegt und so eine an sich bekannte schwingungsdämpfende Wirkung erzeugt. Der Gestrickeschlauch ist hierbei einerseits am Bord 4 und andererseits am Rohrabschnitt 3 mittels jeweils einer Endhülse 9 am Hüllrohr 1 festgelegt.

Aufgrund von Steifigkeits- und Masseeffekten sind die Eigenschwingungen des rechts dargestellten Balgabschnitts 2b verstimmt, so dass der rechte Balgabschnitt 2b signifikant andere Schwingungseigenschaften aufweist als der linke Balgabschnitt 2a, der ohne verstimmende Elemente bleibt. Hierdurch bilden Eigenschwingungen des Hüllrohrs 1 in einem besonders interessierenden Frequenzbereich von 20 Hz bis 300 Hz keinen Schwingungsknoten im Bereich des Rohrabschnitts 3 aus, insbesondere keine geraden Eigenschwingungen, wie dies im Stand der Technik regelmäßig der Fall ist, und der Metallschlauch 2, der am Rohrabschnitt 3 befestigt ist, kann diese Eigenschwingungen infolgedessen wirksam bedämpfen.

Das in Figur 2 dargestellte Ausführungsbespiel weist hingegen deswegen unterschiedliche Schwingungseigenschaften der beiden flexiblen Leitungsabschnitte auf, weil die Balgabschnitte 2a, 2b mit jeweils unterschiedlichen Geometrien der Wellen 7 versehen sind. Wie deutlich zu erkennen ist, weisen die Wellen 7 des rechten Balgabschnitts 2b in etwa die doppelte radiale Höhe wie die Wellen 7 des linken Balgabschnitts 2a auf. Trotzdem die Anzahl der Wellen 7 der beiden Balgabschnitte 2a, 2b gleich ist, ergeben sich durch die unterschiedlichen Geometrien der Wellen 7 deutlich unterschiedliche Schwingungsverhalten der Balgabschnitte 2a, 2b, so dass insgesamt, da der Metallschlauch 5 symmetrisch ausgebildet ist, die erfindungsgemäß gewollte Asymmetrie des Leitungselements vorliegt, und somit die symmetrisch mittig im Rohrabschnitt 3 angeordnete Verpressung 10 zum Befestigen des Metallschlauchs 5 am Hüllrohr 1 in einem Bereich liegt, in dem kein Schwingungsknoten von axialen Resonanzschwingungen des Hüllrohrs 1, zumindest von Resonanzschwingungen in seinen geraden axialen Eigenfrequenzen im Frequenzbereich von 20 Hz bis 300 Hz liegen.

Das in Figur 3 dargestellte Ausführungsbeispiel schließlich sorgt dadurch für die gewollte erfindungsgemäße Asymmetrie, dass das Hüllrohr 1 nicht durchgehend einlagig, sondern im Bereich des rechten Balgabschnitts 2b mehrlagig ausgebildet ist. Dies ist anhand der Detailvergrößerungen X (Figur 3a) und Y (Figur 3b) zu erkennen. Die einzelnen Lagen des rechten Balgabschnitts 2b weisen hierbei unterschiedliche Materialstärken auf oder bestehen aus unterschiedlichen Materialien. Diese mehrlagige Ausbildung des Balgabschnitts 2, der aus einem mehrwandigen Rohr hergestellt worden ist, sorgt dafür, dass der rechte Balgabschnitt 2b ein deutlich anderes Schwingungsverhalten aufweist als der linke Balgabschnitt 2a.

Neben diesen drei Ausführungsbeispielen gibt es mannigfache weitere Möglichkeiten, die vorliegende Erfindung zu verwirklichen.

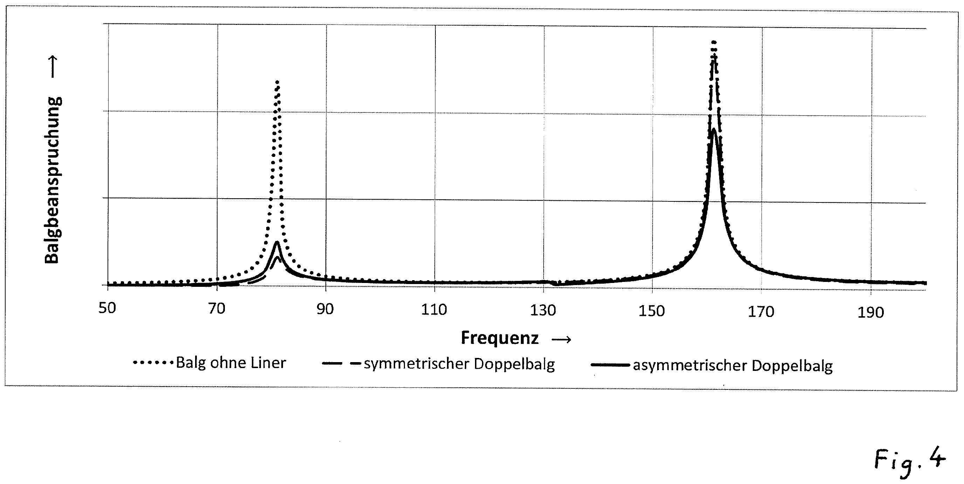

In Figur 4 ist ein Diagramm dargestellt, in welchem die Balgbeanspruchung, d.h. die Schwingungsamplituden im Hüllrohr 1 über einer axialen Anregungsfrequenz von ca. 50 Hz bis ca. 200 Hz aufgetragen ist, und zwar für drei verschiedene Leitungselemente:

Die punktierte Kurve ist das Messergebnis eines Hüllrohrs mit zwei ringgewellten Balgabschnitten ohne einen in seinem Inneren verlaufenden Metallschlauch ("Balg ohne Liner"); deutlich erkennbar ist eine außerordentlich hohe Belastung des Hüllrohrs in seinen Eigenfrequenzen, die sich hier etwa bei 80 Hz und etwa bei 160 Hz befinden.

Die gestrichelte Kurve ist das Messergebnis eines flexiblen Leitungselements der vorliegenden Art, das, wie im Stand der Technik üblich, aus einem Hüllrohr mit zwei symmetrisch ausgebildeten Balgabschnitten und einem symmetrisch an diese angebundenen, im Inneren des Hüllrohrs verlaufenden Metallschlauch besteht ("symmetrischer Doppelbalg"). Das Hüllrohr weist wiederum Eigenfrequenzen bei etwa 80 Hz und bei etwa 160 Hz auf. Wie die gestrichelte Linie zeigt, wird dieser symmetrische Doppelbalg bei einer Anregungsfrequenz von etwa 80 Hz kaum höher belastet als bei den umgebenden Anregungsfrequenzen, wohingegen seine Beanspruchung durch Eigenschwingungsamplituden bei einer Anregungsfrequenz von etwa 160 Hz besonders hoch ist.

Die durchgezogene Linie ist schließlich das Messergebnis eines erfindungsgemäß ausgestalteten flexiblen Leitungselements ("asymmetrischer Doppelbalg"), wobei die beiden Balgabschnitte des Hüllrohrs so ausgebildet sind, dass ihre jeweiligen Eigenfrequenzen signifikant voneinander abweichen. Wie beim Stand der Technik "symmetrischer Doppelbalg" ist der im Inneren des Hüllrohrs verlaufende Metallschlauch mittig, d.h. symmetrisch am unflexiblen Rohrabschnitt festgelegt. Aufgrund der asymmetrischen Ausbildung der beiden Balgabschnitte bildet sich bei den Eigenfrequenzen des Hüllrohrs bei etwa 80 Hz und bei etwa 160 Hz kein Schwingungsknoten im Bereich des unflexiblen Rohrabschnitts, so dass auch die Befestigung des Metallschlauchs nicht in einem Schwingungsknoten liegt.

Mit der durchgezogenen Linie zeigt das in Figur 5 dargestellte Messergebnis den Erfolg der sich durch die asymmetrische Ausgestaltung des Hüllrohrs ergebenden Eigenschaften des flexiblen Leitungselements: Bei einer Anregungsfrequenz von etwa 80 Hz ist die Beanspruchung des Hüllrohrs zwar etwas größer als beim "symmetrischen Doppelbalg" nach dem Stand der Technik, jedoch noch immer ganz wesentlich kleiner als beim "Balg ohne Liner". Bei einer Anregungsfrequenz von etwa 160 Hz hat sich die Balgbeanspruchung gegenüber dem Stand der Technik "symmetrischer Doppelbalg" jedoch um etwa einen Faktor 2 reduziert.

## Patentansprüche

1. Flexibles Leitungselement für die Abgasanlage eines Verbrennungsmotors, mit einem gasdichten metallischen Hüllrohr (1), das mindestens zwei ringgewellte oder helixförmig gewellte Balgabschnitte (2) aufweist, um flexible Leitungsabschnitte zu bilden, die durch einen nicht gewellten, im wesentlichen unflexiblen Rohrabschnitt (3) getrennt sind, und mit einem im Inneren des Hüllrohrs verlaufenden Metallschlauch (5), der am Rohrabschnitt (3) befestigt ist, wobei das Hüllrohr (1) axiale Eigenfrequenzen aufweist und bei einer axialen Resonanzschwingung Schwingungsknoten ausbildet, wobei die beiden Leitungsabschnitte solcherart ausgestaltet sind, dass mindestens die Schwingungsformen der niedrigen axialen Eigenfrequenzer im Frequenzbereich von 20 Hz - 300 Hz des Hüllrohrs (1), insbesondere der ersten bis fünften, bevorzugt der ersten bis dritten Eigenfrequenzen, keinen Schwingungsknoten im Bereich der Befestigung des Metallschlauchs (5) am Rohrabschnitt (3) aufweisen.

2. Flexibles Leitungselement nach Anspruch 1, wobei die beiden Balgabschnitte (2) hinsichtlich ihrer Geometrie und/oder ihres Materials unterschiedlich ausgeführt und/oder mit zusätzlichen Verstimmungselementen (8) versehen sind, so dass mindestens die Schwingungsformen der niedrigen axialen Eigenfrequenzen des Hüllrohrs, insbesondere der ersten bis fünften, bevorzugt der ersten bis dritten Eigenfrequenzen, keinen Schwingungsknoten im Bereich der Befestigung des Metallschlauchs (5) am Rohrabschnitt (3) aufweisen.

3. Flexibles Leitungselement nach einem der Ansprüche 1 oder 2, wobei die beiden Leitungsabschnitte solcherart ausgestaltet, insbesondere die Balgabschnitte (2) des Hüllrohrs (1) hinsichtlich ihrer Geometrie und/oder ihres Materials solcherart unterschiedlich ausgeführt und/oder mit zusätzlichen Verstimmungselementen (8) versehen sind, dass mindestens die Schwingungsformen der niedrigen axialen Eigenfrequenzen des Hüllrohrs (1) im Frequenzbereich von 20 Hz bis 300 Hz keinen Schwingungsknoten im Bereich der Befestigung des Metallschlauchs (5) am Rohrabschnitt (3) aufweisen.

4. Flexibles Leitungselement nach Anspruch 3, wobei der Metallschlauch (5) außermittig am Rohrabschnitt (3) befestigt ist.

5. Flexibles Leitungselement nach mindestens einem der Ansprüche 1 bis 4, wobei die Balgabschnitte (2) unterschiedliche Wellenformen und/oder eine unterschiedliche Anzahl von Wellen (7) aufweisen.

6. Flexibles Leitungselement nach mindestens einem der Ansprüche 1 bis 5, wobei die Balgabschnitte (2) unterschiedliche Wandstärken aufweisen.

7. Flexibles Leitungselement nach mindestens einem der Ansprüche 1 bis 6, wobei die Balgabschnitte (2) aus unterschiedlichen Materialien bestehen und/oder unterschiedliche Beschichtungen mit unterschiedlichen Auswirkungen auf die Eigenfrequenzen der jeweiligen Balgabschnitte (2) aufweisen.

8. Flexibles Leitungselement nach mindestens einem der Ansprüche 1 bis 7, wobei mindestens ein Balgabschnitt (2) mit einem Verstimmungselement versehen ist, das die Eigenfrequenzen des betreffenden Balgabschnitts verändert.

9. Flexibles Leitungselement nach mindestens einem der Ansprüche 1 bis 8, wobei der Metallschlauch (7) ein Agraffschlauch ist.

10. Flexibles Leitungselement nach mindestens einem der Ansprüche 1 bis 9, wobei sich die ersten axialen Eigenfrequenzen der flexiblen Leitungsabschnitte, insbesondere der Balgabschnitte (2) um mindestens 20 % voneinander unterscheiden.

## Claims

1. Flexible pipe element for the exhaust system of a combustion engine, having a gastight metal cladding pipe (1) which has at least two ring-corrugated or helicallycorrugated bellows sections (2) in order to form flexible pipe sections, which are separated by a non-corrugated, substantially inflexible tube section (3), and having a metal hose (5) extending in the interior of the cladding pipe, which metal hose is fastened to the tube section (3), wherein the cladding pipe (1) has axial natural frequencies and forms vibration nodes in the case of an axial resonance vibration, wherein the two pipe sections are designed such that at least the modes of vibration of the low axial natural frequencies in the frequency range of 20 Hz - 300 Hz of the cladding pipe (1), in particular of the first to the fifth, preferably the first to the third natural frequencies, have no vibration nodes in the region of the fastening of the metal hose (5) to the tube section (3).

2. Flexible pipe element according to claim 1, wherein the two bellows sections (2) are designed differently with respect to their geometry and/or their material and/or are equipped with additional detuning elements (8), such that at least the modes of vibration of the low axial natural frequencies of the cladding pipe, in particular of the first to the fifth, preferably the first to the third natural frequencies, have no vibration nodes in the region of the fastening of the metal hose (5) to the tube section (3).

3. Flexible pipe element according to any of claims 1 or 2, wherein the two pipe sections are configured such, in particular the bellows sections (2) of the cladding pipe (1) are designed with respect to their geometry and/or their material so as to be different to such an extent and/or are equipped with additional detuning elements (8), that at least the modes of vibration of the low axial natural frequencies of the cladding pipe (1) in the frequency range of 20 Hz to 300 Hz have no vibration nodes in the region of the fastening of the metal hose (5) to the tube section (3).

4. Flexible pipe element according to claim 3, wherein the metal hose (5) is fastened eccentrically on the tube section (3).

5. Flexible pipe element according to at least one of claims 1 to 4, wherein the bellows sections (2) have different corrugation shapes and/or a different number of corrugations (7).

6. Flexible pipe element according to at least one of claims 1 to 5, wherein the bellows sections (2) have different wall thicknesses.

7. Flexible pipe element according to at least one of claims 1 to 6, wherein the bellows sections (2) consist of different materials and/or have different coatings with different effects on the natural frequencies of the respective bellows sections (2).

8. Flexible pipe element according to at least one of claims 1 to 7, wherein at least one bellows section (2) is equipped with a detuning element which alters the natural frequencies of the bellows section concerned.

9. Flexible pipe element according to at least one of claims 1 to 8, wherein the metal hose (7) is an Agraff hose.

10. Flexible pipe element according to at least one of claims 1 to 9, wherein the first axial natural frequencies of the flexible pipe sections, in particular of the bellows sections (2) differ by at least 20% from one another.

## Revendications

1. Elément de conduite flexible pour l'installation de gaz d'échappement d'un moteur à combustion interne, avec un tube enveloppe (1) métallique étanche aux gaz qui présente au moins deux sections de soufflet (2) ondulées en forme d'hélice ou ondulées en anneau afin de former des sections de conduite flexibles qui sont séparées par une section de tube (3) sensiblement non flexible, non ondulée, et avec un tuyau métallique (5) s'étendant à l'intérieur du tube enveloppe qui est fixé à la section de tube (3), dans lequel le tube enveloppe (1) présente des fréquences propres axiales et pour une oscillation de résonance axiale réalise des nœuds d'oscillation, dans lequel les deux sections de conduite sont configurées de telle manière qu'au moins les formes d'oscillation des fréquences propres axiales basses dans la plage de fréquence de 20 Hz - 300 Hz du tube enveloppe (1), en particulier de la première à la cinquième, de préférence de la première à la troisième fréquences propres, ne présentent aucun nœud d'oscillation dans la zone de la fixation du tuyau métallique (5) à la section de tube (3).

2. Elément de conduite flexible selon la revendication 1, dans lequel les deux sections de soufflet (2) sont réalisées différemment en ce qui concerne leur géométrie et/ou leur matériau et/ou sont pourvues d'éléments de désaccord (8) supplémentaires de sorte qu'au moins les formes d'oscillation des fréquences propres axiales basses du tube enveloppe, en particulier de la première à la cinquième, de préférence de la première à la troisième fréquences propres, ne présentent aucun nœud d'oscillation dans la zone de la fixation du tuyau métallique (5) à la section de tube (3).

3. Elément de conduite flexible selon l'une quelconque des revendications 1 ou 2, dans lequel les deux sections de conduite sont configurées de telle manière, en particulier les sections de soufflet (2) du tube enveloppe (1) sont réalisées différemment en ce qui concerne leur géométrie et/ou leur matériau de telle manière et/ou sont pourvues d'éléments de désaccord (8) supplémentaires, qu'au moins les formes d'oscillation des fréquences propres axiales basses du tube enveloppe (1) dans la plage de fréquence de 20 Hz à 300 Hz ne présentent aucun nœud d'oscillation dans la zone de la fixation du tuyau métallique (5) à la section de tube (3).

4. Elément de conduite flexible selon la revendication 3, dans lequel le tuyau métallique (5) est fixé de manière décentrée à la section de tube (3).

5. Elément de conduite flexible selon au moins l'une quelconque des revendications 1 à 4, dans lequel les sections de soufflet (2) présentent différentes formes d'onde et/ou un nombre différent d'ondes (7).

6. Elément de conduite flexible selon au moins l'une quelconque des revendications 1 à 5, dans lequel les sections de soufflet (2) présentent différentes épaisseurs de paroi.

7. Elément de conduite flexible selon au moins l'une quelconque des revendications 1 à 6, dans lequel les sections de soufflet (2) se composent de différents matériaux et/ou présentent différents revêtements avec différentes répercussions sur les fréquences propres des sections de soufflet (2) respectives.

8. Elément de conduite flexible selon au moins l'une quelconque des revendications 1 à 7, dans lequel au moins une section de soufflet (2) est pourvue d'un élément de désaccord qui modifie les fréquences propres de la section de soufflet concernée.

9. Elément de conduite flexible selon au moins l'une quelconque des revendications 1 à 8, dans lequel le tuyau métallique (7) est un tuyau à agrafe.

10. Elément de conduite flexible selon au moins l'une quelconque des revendications 1 à 9, dans lequel les premières fréquences propres axiales des sections de conduite flexibles, en particulier des sections de soufflet (2) se distinguent d'au moins 20 % les unes des autres.
